# EUROPÄISCHE PATENTSCHRIFT

(11) **EP 1 183 171 B1**
(45) Veröffentlichungstag und Bekanntmachung des Hinweises auf die Patenterteilung: **22.10.2003**
(21) Anmeldenummer: 00936759.0
(22) Anmeldetag: 19.05.2000
(51) Int. Cl.: B60T 8/32, B60T 13/68

(54) **ELEKTRONISCH GEREGELTES BREMSSYSTEM**
ELECTRONICALLY REGULATED BRAKE SYSTEM
SYSTEME DE FREINAGE A REGULATION ELECTRONIQUE

(30) Priorität: 21.05.1999 DE 19923458
(43) Veröffentlichungstag der Anmeldung: 06.03.2002
(73) Patentinhaber: KNORR-BREMSE Systeme für Nutzfahrzeuge GmbH, 80809 München (DE)
(72) Erfinder: STUMPE, Werner, D-70374 Stuttgart (DE); SCHRAMM, Herbert, D-71229 Leonhard (DE); BEYER, Claus, D-71640 Ludwigsburg (DE); WREDE, Jürgen, D-74321 Bietigheim-Bissingen (DE)
(74) Vertreter: Mattusch, Gundula
(86) Internationale Anmeldenummer: EP0004555
(87) Internationale Veröffentlichungsnummer: WO00071400

(56) Entgegenhaltungen:
- EP-A- 0 467 112
- EP-A- 0 652 145
- EP-A- 0 845 397
- EP-B- 0 304 610
- DE-A- 3 215 475
- DE-A- 4 008 095
- DE-A- 4 227 083
- DECKER H ET AL: "ELEKTRONISCH GEREGELTE NUTZFAHRZEUGBREMSE ELECTRONICALLY CONTROLLED BRAKES FOR COMMERCIAL VEHICLES" ATZ AUTOMOBILTECHNISCHE ZEITSCHRIFT,DE,FRANCKH'SCHE VERLAGSHANDLUNG. STUTTGART, Bd. 96, Nr. 9, 1. September 1994 (1994-09-01), Seiten 506-508,510, XP000464674 ISSN: 0001-2785

## Beschreibung

### Stand der Technik

Die Erfindung geht aus von einem elektronisch geregelten Bremssystem nach der Gattung des Patentanspruchs 1.

Aus dem Stand der Technik, beispielsweise aus dem Artikel "Elektronisch geregelte Nutzfahrzeugbremse" in ATZ Automobiltechnische Zeitschrift 96(1994) September, No.9, sind elektronisch geregelte Bremssysteme für Nutzfahrzeuge bekannt, mit mindestens einem Drucksteuerventil und mindestens einem Druckregelventil oder mit mindestens einem Drucksteuerventil und mindestens einem Druckregelventil und mindestens einem Druckregelmodul, wobei das Drucksteuerventil einem Fahrzeugrad zugeordnet und zur radschlupfabhängigen Steuerung des in eine Bremse des Rades eingesteuerten, von einem fahrerbetätigbaren Bremswertgeber bzw. Bremsventil oder einem Druckregelventil erzeugten Bremsdruck ausgebildet ist, das Druckregelventil zur fahrerwunschabhängigen Erzeugung des Bremsdrucks ausgebildet ist und einen Drucksensor zur Überwachung des Bremsdrucks sowie eine Regelelektronik aufweist, mit welcher der Bremsdruck durch Soll-lstwert-Vergleich achs- oder seitenweise einregelbar und an das mindestens eine radbezogene Drucksteuerventil weiterleitbar ist, das Druckregelmodul zur fahrerwunschabhängigen Erzeugung des Bremsdrucks ausgebildet ist und einen Drucksensor zur Überwachung des Bremsdrucks sowie eine Regelelektronik aufweist, mit welcher der Bremsdruck durch Soll-Istwert-Vergleich achsweise einregelbar und unmittelbar an mindestens eine Radbremse weiterleitbar sowie radschlupfabhängig radindividuell regelbar ist, und das zentrale Steuergerät nur mit dem mindestens einen Druckregelventil und dem mindestens einen Druckregelmodul oder nur mit dem mindestens einen Druckregelventil kommuniziert, oder das zentrale Steuergerät nur mit dem mindestens einen Drucksteuerventil, dem ein vom fahrerbetätigbaren Bremswertgeber bzw. Bremsventil erzeugter Bremsdruck unmittelbar zuführbar ist, und dem mindestens einen Druckregelventil kommuniziert.

In das zentrale Steuergerät sind radschlupfabhängige Regelungen für ABS (Anti-Blockier-System) und/oder ASR (Antriebsschlupfregelung) integriert, so daß der jeweilige Bremsdruck zusätzlich abhängig vom Drehverhalten der abgebremsten Räder mittels den Druckregelventilen radnah nachgeordneten Drucksteuerventilen geregelt wird.

Hierbei haben die von den Drucksteuerventilen und Sensoren an das zentrale Steuergerät und in umgekehrter Richtung gelieferten Daten jedoch relativ lange Strecken zu durchlaufen, was für schnelle radschlupfabhängige Regelungen von Nachteil ist. Darüber hinaus ist das oben beschriebene Bremssystem insbesondere für mehrachsige Fahrzeuge nur sehr aufwendig zu realisieren, weil der Montage- und Verkabelungsaufwand hoch ist, um die weit entfernt angeordneten Sensoren und Ventile mit dem zentralen Steuergerät zu verbinden.

Aus der DE 42 27 083 A1 ist eine elektronisches Bremssystem für Straßenfahrzeuge bekannt, bei welchem die gesamte Elektronik in zwei Einheiten aufgeteilt ist, die miteinander kommunizieren, wobei die eine Elektronikeinheit durch die Elektronikeinheit eines Druckregelmoduls und die andere Elektronikeinheit bis zu zwei Drucksteuerventilen zugeordnet ist.

Die EP 0 652 145 A1 offenbart ein elektronisches Bremsregelsystem mit einer Vielzahl von Drucksteuerventilen, denen lokale Regeleinheiten zugeordnet sind, welche mit einer zentralen Steuereinheit kommunizieren. Bei diesem Bremssystem wird ein Teil der ABS-Regellogik eines Rades durch die dem betreffenden Rad zugeordnete lokale Regeleinheit durchgeführt, während der verbleibende Teil der ABS-Regellogik für dieses Rad von der zentralen Steuereinheit ausgeführt wird. Weil die zentrale Steuereinheit zur Realisierung der ABS-Funktion mit den lokalen Regeleinheiten der Drucksteuerventile kommunizieren muß, sind zu diesem Zweck entsprechende Verbindungskabel vorzusehen bzw. wird ein evtl. vorhandener Datenbus durch entsprechende Daten belegt, was sich negativ auf den Verkabelungsaufwand bzw. die Datenübertragungsgeschwindigkeit auswirkt.

Der Erfindung liegt demgegenüber die Aufgabe zugrunde, ein elektronisch geregeltes Bremssystem zu entwickeln, bei welchem die genannten Nachteile vermieden werden.

Diese Aufgabe wird durch die kennzeichnenden Merkmale von Anspruch 1 gelöst.

### Vorteile der Erfindung

Das erfindungsgemäße elektronisch geregelte Bremssystem hat den Vorteil, daß wegen der vollständigen Integration der radschlupfabhängigen Regelung wie eine ABS- undloder eine ASR-Regelung in die Regelelektroniken der Druckregelventile die entsprechenden Verbindungsleitungen zwischen dem zentralen Steuergerät und den radnahen Drucksteuerventilen entfallen, da diese von den am Chassis angeordneten Druckregelventilen direkt angesteuert werden. Abhängig von der Differenz zwischen einer gemessenen Ist-Drehzahl und einer Soll-Drehzahl wird dann von den Druckregelventilen ein Ansteuersignal für ein oder mehrere radbezogene Drucksteuerventile erzeugt. Ein hieraus resultierender schlankerer Kabelbaum zwischen Fahrerhaus und Chassis ist insbesondere bei Nutzfahrzeugen von Vorteil, da bei diesen das Fahrerhaus relativ zum Chassis gekippt wird und bei dicken Kabelbäumen die Gefahr besteht, daß sie abknicken. Außerdem wird der zur Kommunikation zwischen dem zentralen Steuergerät und den Regelelektroniken der radnahen Druckregelventile üblicherweise eingesetzte CAN-Bus entlastet, so daß höhere Übertragungsraten möglich sind. Darüber hinaus werden im Rahmen der heutzutage üblichen geringen Fertigungstiefe bei der Herstellung von Nutzfahrzeugen das Chassis und der Aufbau von verschiedenen Herstellern gefertigt. Infolgedessen ist gemäß der Erfindung der größte Teil des Bremssystems einschließlich der radschlupfabhängigen Regelungselektronik am Chassis vormontierbar, so daß bei der späteren, durch Partnerfirmen erfolgenden Montage des Aufbaus nur noch wenige Schritte zur Fertigstellung der Bremsanlage notwendig sind.

Durch die in den Unteransprüchen aufgeführten Maßnahmen sind vorteilhafte Weiterbildungen und Verbesserungen des im Patentanspruch 1 angegebenen elektronisch geregelten Bremssystems möglich.

### Zeichnungen

Ausführungsbeispiele der Erfindung sind in der Zeichnung dargestellt und in der nachfolgenden Beschreibung näher erläutert. Die einzige Figur der Zeichnung zeigt eine Matrix, in welcher schematisch Ausführungsbeispiele des elektronisch geregelten Bremsystems gemäß der Erfindung dargestellt sind.

### Beschreibung der Ausführungsbeispiele

In der Figur der Zeichnung sind Ausführungsbeispiele von elektronisch geregelten Bremssystemen gemäß der Erfindung in einer 3-Spalten/3-Zeilen-Matrix schematisch dargestellt, wobei in der ersten Spalte Bremssystemvarianten 2-achsiger Nutzfahrzeuge und in Spalte 2 und in Spalte 3 solche 3-achsiger Nutzfahrzeuge dargestellt sind.
Die Abkürzung VA steht für "Vorderachse" und "1.HA, 2. HA" für die erste bzw. zweite Hinterachse, wobei die zweite Hinterachse 2.HA eine Vorlaufachse VL, eine Nachlaufachse NL oder eine Liftachse LA sein kann. Gleichwohl ist das elektronisch geregelte Bremssystem gemäß der Erfindung nicht auf Nutzfahrzeuge beschränkt, sondern es kann bei jeglicher Art von Fahrzeugen eingesetzt werden. Darüber hinaus erschöpft sich die Erfindung nicht in den in der Figur dargestellten Varianten, vielmehr sind noch weitere Ausführungsformen denkbar.

In bekannter Weise wird bei elektronisch geregelten Bremsystemen der Bremsdruck-Sollwert von einem fahrerbetätigten Bremswertgeber (Bremsventil) erzeugt. Ein.zentrales Steuergerät Z1, Z2 gibt entsprechend dem Bremsdruck-Sollwert ein elektrisches Signal ab, mit welchem gemäß der in der Figur dargestellten Varianten ein Druckregelventil B und gegebehenfalls ein Druckregelmodul C angesteuert wird. Im folgenden ist zunächst der Aufbau und die Funktion der in der Matrix verzeichneten drei unterschiedlichen Ventiltypen A, B und C erläutert :

Im elektronisch geregelten Bremssystem sind Drucksteuerventile A verwendet, wie sie aus der EP 0 304 610 B1 bekannt sind. Diese weisen ein elektromagnetisch geschaltetes Ein- und Auslaßventil auf. Die radnah angeordneten Drucksteuerventile A erhalten einen von einem fahrerbetätigbaren Bremswertgeber (Bremsventil) oder einem Druckregelventil B erzeugten Bremsdruck und geben diesen bei Nichtansteuerung unverändert an die Radbremse des zugeordneten Fahrzeugrades weiter.

Die Drucksteuerventile A werden zur radschlupfabhängigen Steuerung des Bremsdrucks aktiviert, d.h. das Ein- und Auslaßventil wird zur Modulation des Bremsdrucks entsprechend geschaltet. Die Drucksteuerventile A sind elektrisch ansteuerbar von einem zentralen Steuergerät Z2, wenn von einem Bremswertgeber (Bremsventil) Bremsdruck unmittelbar in die Drucksteuerventile A eingesteuert wird (Spalte 1, Zeile 3 der Matrix).

Die radschlupfabhängige Steuerung des Bremsdrucks findet Anwendung zum Zwecke der Blockierschutzregelung (ABS), der Antriebsschlupfregelung (ASR) und der fahrerunabhängigen Bremsenbetätigung, beispielsweise zum Zwecke der Fahrzeugstabilisierung (Fahrdynamikregelung ESP) sowie Fahrzeugabstandsregelung.

Anstatt von einem zentralen Steuergerät Z2 können die Drucksteuerventile A auch von Druckregelventilen B angesteuert werden, wie anhand der Variante in Spalte 1, Zeile 1 der Matrix gezeigt ist. Dort ist an der Vorderachse VA und an der Hinterachse HA je ein Druckregelventil B vorgesehen, welche einen Bremsdruck achsweise einstellen, mit dem die Betriebsbremswirkung entsprechend dem Fahrerwunsch oder anderen gleichwertigen Vorgaben erreicht wird. Je Achse sind einem solchen Druckregelventil B jeweils zwei radbezogene Drucksteuerventile A nachgeschaltet, die den Bremsdruck bedarfsweise individuell z.B. nach dem Drehverhalten des gebremsten Rades anpassen.

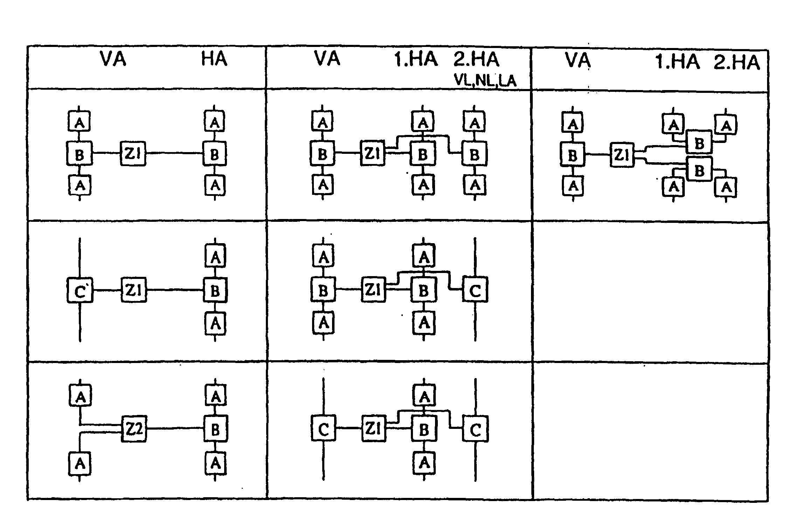

Ein solches Druckregelventil B umfaßt vorzugsweise ein an einen Druckluftvorrat angeschlossenes Einlaßventil, ein mit der Atmosphäre verbundenes Auslaßventil, einen Drucksensor sowie eine Regelelektronik, welche in Abhängigkeit vom elektrischen Bremsdruck-Sollwert des zentralen Steuergeräts und einem vom Drucksensor gemessenen Bremsdruck-Istwert einen Bremsdruck einregelt. Dieser eingeregelte Bremsdruck wird über nicht dargestellte pneumatische Verbindungsleitungen durch die Drucksteuerventile A durchgesteuert und an die Bremszylinder der einzelnen Räder weitergeleitet. Zusätzlich ist in erfindungswesentlicher Weise in die Regelelektronik eines solchen Druckregelventils B eine radschlupfabhängige Regelung, z.B. eine Anti-Blockier-System-Regelung (ABS) und eine Antriebsschlupfregelung (ASR), für je ein gebremstes Rad integriert, so daß abhängig vom Vergleich der am jeweiligen Rad gemessenen Ist-Drehzahl mit der entsprechenden Soll-Drehzahl ein elektrisches Ansteuersignal für das nachgeschaltete Drucksteuerventil A erzeugt wird, welches dann z.B. den vom Druckregelventil B achsweise eingeregelten Bremsdruck moduliert. Vom mechanischen Aufbau her ist ein derartiges Druckregelventil B der Vorrichtung aus Fig.1 der EP 0 845 397 A2 vergleichbar.

Im Ausführungsbeispiel in Spalte 1, Zeile 2 der Matrix ist die Vorderachse VA mit einem Druckregelmodul C ausgerüstet, welcher vom zentralen Steuergerät Z1 angesteuert wird. Das Druckregelmodul C beinhaltet ebenso wie das Druckregelventil B ein an einen Druckluftvorrat angeschlossenes Einlaßventil, ein mit der Atmosphäre verbundenes Auslaßventil, einen Drucksensor sowie eine Regelelektronik. Das Druckregelmodul C hat in einem ersten Funktionsbaustein die Aufgabe der achsweisen Bremsdruckregelung wie das vorangehend beschriebene Druckregelventil B. Daher regelt es in Abhängigkeit vom Bremsdruck-Sollwert und einem vom Drucksensor gemessenen Bremsdruck-Istwert einen achsweisen Bremsdruck ein.

Darüber hinaus ermöglicht das Druckregelmodul C in einem zweiten, integrierten Funktionsblock die Anpassung an das Drehverhalten der gebremsten Räder, z.B. nach dem bekannten Select-Low-Verfahren oder nach dem modifizierten Select-Low-Verfahren mit erhöhtem Schlupfanteil eines der gebremsten Räder (Select-Smart-Verfahren). Hierzu wird durch die Regelelektronik des Druckregelmoduls C abhängig von der Differenz zwischen gemessenen Ist-Drehzahl und einer Soll-Drehzahl ein elektrisches Ansteuersignal für das Einlaßventil und das Auslaßventil des Druckregelmoduls C erzeugt, welche somit die Funktion eines Drucksteuerventils A übernehmen. Demnach sind in dem Druckregelmodul C die ABS-, die ASR- und ESP-Funktionen der einzelnen Räder integriert. Im mechanischen Aufbau und der Funktion entspricht das Druckregelmodul C der Vorrichtung aus EP 0 845 397 A2, Fig.1.

Wie für zweiachsige Nutzfahrzeuge sind die verschiedenen Ventiltypen A, B und C auch für dreiachsige Nutzfahrzeuge achsweise kombinierbar. So ist es möglich, mit dem Druckregelventil B z.B. an einer Tandemachse seitenweise den Bremsdruck mit den Druckregelventilen B einzustellen und die radindividuelle ABS- bzw. ASR-Regelung durch die nachgeschalteten Drucksteuerventile A vorzunehmen, wie anhand der Ausführungsform in Spalte 3, Zeile 1 der Matrix gezeigt ist. Gemäß den Beispielen von Spalte 2, Zeile 2 und Spalte 2, Zeile 3 könnte die zweite Hinterachse 2.HA oder die Vorderachse VA auch mit einem Druckregelmodul C bestückt sein. Nicht dargestellt ist die Variante, bei welcher die Vorderachse mit einem Druckregelmodul C und beide Hinterachsen 1.HA und 2.HA mit Druckregelventilen B und nachgeschalteten Drucksteuerventilen A versehen sind.

Im folgenden werden die in der Matrix der Figur dargestellten Ausführungsbeispiele von elektronisch geregelten Bremssystemen im einzelnen beschrieben :

Gemäß der Ausführungsform in Spalte 1, Zeile 1 sind an der Vorderachse VA und an der Hinterachse HA je ein Druckregelventil B vorgesehen, welches vom zentralen Steuergerät Z1 angesteuert wird. Den beiden Druckregelventilen B nachgeschaltet sind jeweils zwei radbezogene Drucksteuerventile A. Die Ausführungsform in Spalte 1, Zeile 2 zeigt an der Vorderachse VA einen Druckregelmodul C und an der Hinterachse HA ein Druckregelventil B, welche vom zentralen Steuergerät Z1 angesteuert sind, wobei das Druckregelventil B zwei nachgeschaltete Drucksteuerventile A steuert. Gemäß der Variante in Spalte 1, Zeile 3 sind an der Vorderachse VA zwei Drucksteuerventile A und an der Hinterachse HA ein Druckregelventil B mit zwei nachgeschalteten Drucksteuerventilen A vorgesehen.

In Spalte 2, Zeile 1 der Matrix ist eine Ausführungsform dargestellt, bei welcher an der Vorderachse VA, an der ersten Hinterachse 1.HA und an der zweiten Hinterachse 2.HA je ein vom zentralen Steuergerät Z1 angesteuertes Druckregelventil B mit je zwei nachgeschalteten Drucksteuerventilen A vorgesehen sind. Bei der Ausführungsform gemäß Spalte 2, Zeile 2 ist demgegenüber die zweite Hinterachse 2.HA nicht mit einer A-B-A-Ventilkombination sondern mit einem Druckregelmodul C ausgerüstet. Bei der Variante in der letzten Zeile von Spalte 2 ist im Unterschied zur vorangehenden an der Vorderachse VA ein Druckregelmodul C vorgesehen. Schließlich sind bei der Ausführungsform gemäß Spalte 3, Zeile 1 zwei Druckregelventile B vorgesehen, welche die Drucksteuerventile A der Räder der beiden Hinterachsen nicht achsweise, sondern seitenweise ansteuern.

Zusammenfassend sind bei den Ausführungsformen gemäß der Figur daher je Fahrzeugachse entweder zwei direkt angesteuerte Drucksteuerventile A oder ein Druckregelventil B mit zwei nachgeschalteten Drucksteuerventilen A oder ein Druckregelmodul C vorgesehen. Alternativ können die Drucksteuerventile A einzelner Räder statt achsweise auch seitenweise angesteuert werden. Anhand des beschriebenen Strukturaufbaus können eine Vielzahl elektronisch geregelter Bremssysteme kostengünstig dargestellt werden.

Das erfindungsgemäße elektronische Bremssystem zeichnet sich neben der geringen Zahl seiner Komponenten insbesondere durch eine vereinfachte Verkabelung aus, da das zentrale Steuergerät Z1 bzw. Z2 bei der Achsausstattung ( A - B - A ) an dieser Achse nur mit dem Druckregelventil B zu verkabeln ist.

## Patentansprüche

1. Elektronisch geregeltes Bremssystem mit einem zentralen Steuergerät (Z1; Z2), mit mindestens einem Drucksteuerventil (A) und mindestens einem Druckregelventil (B) oder mit mindestens einem Drucksteuerventil (A) und mindestens einem Druckregelventil (B) und mindestens einem Druckregelmodul (C), wobei
a) das Drucksteuerventil (A) einem Fahrzeugrad zugeordnet und zur radschlupfabhängigen Steuerung des in eine Bremse des Rades eingesteuerten, von einem fahrerbetätigbaren Bremswertgeber bzw. Bremsventil oder einem Druckregelventil (B) erzeugten Bremsdruck ausgebildet ist,
b) das Druckregelventil (B) zur fahrerwunschabhängigen Erzeugung des Bremsdrucks ausgebildet ist und einen Drucksensor zur Überwachung des Bremsdrucks sowie eine Regelelektronik aufweist, mit welcher der Bremsdruck durch Soll-Istwert-Vergleich achs- oder seitenweise einregelbar und an das mindestens eine radbezogene Drucksteuerventil (A) weiterleitbar ist,
c) das Druckregelmodul (C) zur fahrerwunschabhängigen Erzeugung des Bremsdrucks ausgebildet ist und einen Drucksensor zur Überwachung des Bremsdrucks sowie eine Regelelektronik aufweist, mit welcher der Bremsdruck durch Soll-lstwert-Vergleich achsweise einregelbar und unmittelbar an mindestens eine Radbremse weiterleitbar sowie radschlupfabhängig radindividuell regelbar ist, und
d1) das zentrale Steuergerät (Z1) nur das mindestens eine Druckregelventil (B) und das mindestens eine Druckregelmodul (C) oder nur das mindestens eine Druckregelventil (B) ansteuert, oder
d2) das zentrale Steuergerät (Z2) nur das mindestens eine Drucksteuerventil (A), dem ein vom fahrerbetätigbaren Bremswertgeber bzw. Bremsventil erzeugter Bremsdruck unmittelbar zuführbar ist, und das mindestens eine Druckregelventil (B) ansteuert,
**dadurch gekennzeichnet, daß**
e) in die Regelelektronik des Druckregelventils (B) zusätzlich eine radschlupfabhängige Regelung für je ein gebremstes Rad integriert ist, mit der ein elektrisches Ansteuersignal für je ein dem Druckregelventil (B) nachgeschaltetes Drucksteuerventil (A) erzeugbar ist.

2. Elektronisch geregeltes Bremssystem nach Anspruch 1, **dadurch gekennzeichnet, daß** je Fahrzeugachse ein Druckregelventil (B) mit zwei nachgeschalteten Drucksteuerventilen (A) oder ein Druckregelmodul (C) vorgesehen sind, oder daß Drucksteuerventile (A) durch Druckregelventile (B) seitenweise angesteuert sind.

3. Elektronisch geregeltes Bremssystem nach Anspruch 1 oder 2, **dadurch gekennzeichnet, daß** für eine Vorderachse (VA) und für eine Hinterachse (HA) je ein Druckregelventil (B) mit je zwei nachgeschalteten Drucksteuerventilen (A) vorgesehen sind, wobei die beiden Druckregelventile (B) vom zentralen Steuergerät (Z1) ansteuerbar sind.

4. Elektronisch geregeltes Bremssystem nach Anspruch 1 oder 2, **dadurch gekennzeichnet, daß** für eine Vorderachse (VA) ein Druckregelmodul (C) und für eine Hinterachse (HA) ein Druckregelventil (B) mit zwei nachgeschalteten Drucksteuerventilen (A) vorgesehen sind, wobei das Druckregelventil (B) und das Druckregelmodul (C) vom zentra-Ien Steuergerät (Z1) ansteuerbar sind.

5. Elektronisch geregeltes Bremssystem nach Anspruch 1 oder 2, **dadurch gekennzeichnet, daß** für eine Vorderachse (VA) zwei Drucksteuerventile (A) und für eine Hinterachse (HA) ein Druckregelventil (B) mit zwei nachgeschalteten Drucksteuerventilen (A) vorgesehen sind, wobei das Druckregelventil (B) und die beiden DrucksteuerVentile (A) der Vorderachse (VA) vom zentralen Steuergerät (Z2) ansteuerbar sind.

6. Elektronisch geregeltes Bremssystem nach Anspruch 1 oder 2, **dadurch gekennzeichnet, daß** für eine Vorderachse (VA), für eine erste Hinterachse (1.HA) und für eine zweite Hinterachse (2.HA) je ein Druckregelventil (B) mit je zwei nachgeschalteten Drucksteuerventilen (A) vorgesehen sind, wobei die drei Druckregelventile (B) vom zentralen Steuergerät (Z1) ansteuerbar sind.

7. Elektronisch geregeltes Bremssystem nach Anspruch 1 oder 2, **dadurch gekennzeichnet, daß** für eine Vorderachse (VA) und für eine erste Hinterachse (1.HA) je ein Druckregelventil (B) mit je zwei nachgeschalteten Drucksteuerventilen (A) und für eine zweite Hinterachse (2.HA) ein Druckregelmodul (C) vorgesehen sind, wobei die beiden Druckregelventile (B) und das Druckregelmodul (C) vom zentralen Steuergerät (Z1) ansteuerbar sind.

8. Elektronisch geregeltes Bremssystem nach Anspruch 1 oder 2, **dadurch gekennzeichnet, daß** für eine Vorderachse (VA) und für eine zweite Hinterachse (2.HA) je ein Druckregelmodul (C) und für eine erste Hinterachse (1.HA) ein Druckregelventil (B) mit zwei nachgeschalteten Drucksteuerventilen (A) vorgesehen sind, wobei das Druckregelventil (B) und die beiden Druckregelmodule (C) vom zentralen Steuergerät (Z1) ansteuerbar sind.

9. Elektronisch geregeltes Bremssystem nach Anspruch 1 oder 2, **dadurch gekennzeichnet, daß** für eine Vorderachse (VA) ein Druckregelventil (B) mit zwei nachgeschalteten Drucksteuerventilen (A) und für eine erste Hinterachse (1.HA) und für eine zweite Hinterachse (2.HA) zwei Druckregelventile (B) vorgesehen sind, durch welche je zwei Drucksteuerventile (A) einer Seite ansteuerbar sind, wobei die insgesamt drei Druckregelventile (B) vom zentralen Steuergerät (Z1) angesteuert sind.

## Claims

1. Electronically controlled brake system including a central controller (Z1; Z2), comprising at least one pressure control valve (A) and at least one pressure regulating valve (B) or at least one pressure control valve (A) and at least one pressure regulating valve (B) and at least one pressure regulating module (C), wherein
(a) said pressure control valve (A) is associated with a vehicle wheel and is configured for controlling the brake pressure as a function of the wheel slip, which pressure is coupled into a brake on the wheel and is generated by a driver-operated brake value generator or brake valve, respectively, or by a pressure regulating valve (B),
(b) said pressure regulating valve (B) is configured for generating the brake pressure in response to the driver's option and comprises a pressure sensor for monitoring the brake pressure as well as an electronic regulating system by means of which the brake pressure can be regulated by axle or by side by a reference/actual value comparison and can be transferred on to said at least one wheel-related pressure control valve (A),
(c) said pressure regulating module (C) is designed for generating the brake pressure in response to a driver's option and comprises a pressure sensor for monitoring the brake pressure as well as an electronic regulating system by means of which the brake pressure can be regulated by axle by a reference/actual value comparison and can be transferred on directly to at least one wheel brake and can be individually regulated per wheel as a function of the wheel slip, and
(d1) said central controller (Z1) controls only said at least one pressure regulating valve (B) and said at least one pressure regulating module (C) or only said at least one pressure regulating valve (B), or
(d2) said central controller (Z2) controls only said at least one pressure control valve (A), which can be supplied with brake pressure directly by said brake value generator operable by the driver or by said brake valve, respectively, and said at least one pressure regulating valve (B),
**characterised in that**
(e) an additional regulating means operating in response to the wheel slip is integrated into said electronic regulating system of said pressure regulating valve (B) for one respective braked wheel, by means of which system an electric control signal can be generated for one respective pressure control valve (A) joining said pressure regulating valve (B).

2. Electronically controlled brake system according to Claim 1, **characterised in that** one pressure regulating valve (B) with two joining pressure control valves (A) or one pressure regulating module (C) are provided per vehicle axle, or that pressure control valves (A) are controlled by side by means of pressure regulating valves (B).

3. Electronically controlled brake system according to Claim 1 or 2, **characterised in that** one respective pressure regulating valve (B) with two respective joining pressure control valves (A) is provided for one front axle (VA) and for one rear axle (HA), with the two pressure regulating valves (B) being controllable by said central controller (Z1).

4. Electronically controlled brake system according to Claim 1 or 2, **characterised in that** one pressure regulating module (C) is provided for one front axle (VA) and one pressure regulating valve (B) with two joining pressure control valves (A) is provided for one rear axle (HA), with said pressure regulating valve (B) and said pressure regulating module (C) being controllable by said central controller (Z1).

5. Electronically controlled brake system according to Claim 1 or 2, **characterised in that** two pressure control valves (A) are provided for one front axle (VA) and one pressure regulating valve (B) with two joining pressure control valves (A) is provided for one rear axle (HA), with said pressure regulating valve (B) and said two pressure control valves (A) of said front axle (VA) being controllable by said central controller (Z2).

6. Electronically controlled brake system according to Claim 1 or 2, **characterised in that** for one front axle (VA), for one first rear axle (1. HA) and for one second rear axle (2. HA) one respective pressure regulating valve (B) with two respective joining pressure control valves (A) are provided, with said three pressure regulating valves (B) being controllable by said central controller (Z1).

7. Electronically controlled brake system according to Claim 1 or 2, **characterised in that** for one front axle (VA) and for one first rear axle (1. HA) one respective pressure regulating valve (B) with two respective joining pressure control valves is provided and for one second rear axle (2. HA) one pressure regulating module (C) is provided, with said two pressure regulating valves (B) and said pressure regulating module (C) being controllable by said central controller (Z1).

8. Electronically controlled brake system according to Claim 1 or 2, **characterised in that** for one front axle (VA) and for one second rear axle (2. HA) one respective pressure regulating module (C) is provided and for one first rear axle (1. HA) one pressure regulating valve (B) with two joining pressure control valves (A) is provided, with said pressure regulating valve (B) and said two pressure regulating modules (C) being controllable by said central controller (Z1).

9. Electronically controlled brake system according to Claim 1 or 2, **characterised in that** for one front axle (VA) one pressure regulating valve (B) with two joining pressure control valves (A) is provided and for one first rear axle (1. HA) and for one second rear axle (2. HA) two pressure regulating valves (B) are provided, by means of which two respective pressure control valves (A) of one side can be controlled, with said three pressure regulating valves (B) altogether being controllable by said central controller (Z1).

## Revendications

1. Système de freinage régulé électroniquement, comprenant un appareil (Z1; Z2) central de commande, au moins une vanne (A) de commande de la pression et au moins une vanne (B) de régulation de la pression ou au moins une vanne (A) de commande de la pression et au moins une vanne (B) de régulation de la pression et au moins un module (C) de régulation de la pression dans lequel
a) la vanne (A) de commande de la pression est associée à une roue de véhicule et est constituée pour la commande, en fonction du patinage de la roue, de la pression de freinage introduite pour la commande dans un frein de la roue et produite par un générateur de valeur de freinage ou par une vanne de freinage pouvant être actionné par le conducteur ou par une vanne (B) de régulation de la pression,
b) la vanne (B) de régulation de la pression est constituée, pour la production en fonction de ce que souhaite le conducteur, de la pression de freinage et comporte un capteur de pression pour contrôler la pression de freinage ainsi qu'une électronique de régulation, par laquelle la pression de freinage peut être régulée à l'essieu ou sur le côté par comparaison entre une valeur de consigne et une valeur réelle et peut être communiquée à la au moins une vanne (A) de commande de pression rapportée à la roue,
c) le module (C) de régulation de la pression est constitué pour la production, en fonction de ce que souhaite le conducteur, de la pression de freinage et comporte un capteur de pression pour contrôler la pression de freinage, ainsi qu'une électronique de régulation, par laquelle la pression de freinage peut être régulée à l'essieu par comparaison d'une valeur de consigne et d'une valeur réelle et peut être communiquée directement à au moins un frein de roue ainsi qu'être réglée individuellement par roue en fonction du patinage de roue et,
d1) l'appareil (Z1) central de commande ne commande que la au moins une vanne (B) de régulation de la pression et le au moins un module (C) de régulation de la pression ou que la au moins une vanne (B) de régulation de la pression ou,
d2) l'appareil (Z2) central de commande ne commande que la au moins une vanne (A) de commande de la pression, à laquelle peut être envoyée directement une pression de freinage produite par le générateur de valeur de freinage ou la vanne de freinage qui peut être actionnée par le conducteur et la au moins une vanne (B) de régulation de la pression,
**caractérisée en ce que**
e) dans l'électronique de régulation de la vanne (B) de la régulation de la pression, il est intégrée en plus une régulation, en fonction du patinage de roue, pour respectivement une roue très freinée, par laquelle un signal électrique de commande pour respectivement une vanne (A) de commande de la pression, montée en aval de la vanne (B) de régulation de la pression, peut être produit.

2. Système de freinage régulé électroniquement suivant la revendication 1, **caractérisé en ce qu'**il est prévu par essieu du véhicule une vanne (B) de régulation de la pression ayant deux vannes (A) de commande la pression montées en aval ou un module (C) de régulation de la pression ou **en ce que** des vannes (A) de commande de la pression sont commandées par le côté par des vannes (B) de régulation de la pression.

3. Système de freinage régulé électroniquement suivant revendication 1 ou 2, **caractérisé en ce que** pour un essieu (VA) avant et pour un essieu (HA) arrière, il est prévu respectivement une vanne (B) de régulation de la pression ayant deux vannes (A) de commande de la pression montées en aval, les deux vannes (B) de la régulation de la pression pouvant être commandées par l'appareil (Z1) central de commande.

4. Système de freinage régulé électroniquement suivant la revendication 1 ou 2 **caractérisé en ce que** pour un essieu (VA) avant, il est prévu un module (C) de régulation de la pression, et pour un essieu (HA) arrière, il est prévu une vanne (B) de régulation de la pression ayant deux vannes (A) de commande de la pression montées en aval, la vanne (B) de régulation de la pression et le module (C) de régulation de la pression pouvant être commandés par l'appareil (Z1) central de commande.

5. Système de freinage régulé électroniquement suivant la revendication 1 ou 2, **caractérisé en ce que** pour un essieu (VA) avant, il est prévu deux vannes (A) de commande de la pression et pour un essieu (HA) arrière, il est prévu une vanne (B) de régulation de la pression ayant deux vannes (A) de commande de la pression montées en aval, la vanne (B) de régulation de la pression et les deux vannes (A) de commande de la pression de l'essieu (VA) avant pouvant être commandées par l'appareil (Z2) central de commande.

6. Système de freinage régulé électroniquement suivant la revendication 1 ou 2, **caractérisé en ce que** pour un essieu (VA) avant, pour un premier essieu (1.HA) arrière et pour un deuxième essieu (2.HA) arrière, il est prévu respectivement une vanne (B) de régulation de la pression ayant respectivement deux vannes (A) de commande de la pression montées en aval, les trois vannes (B) de régulation de la pression pouvant être commandées par l'appareil (Z1) central de commande;

7. Système de freinage régulé électroniquement suivant la revendication 1 ou 2, **caractérisé en ce que** pour un essieu (VA) avant et pour un premier essieu (1.HA) arrière, il est prévu respectivement une vanne (B) de régulation de la pression ayant respectivement deux vannes (A) de commande de la pression montées en aval et pour un deuxième essieu (2.HA) arrière, il est prévu un module (C) de régulation de la pression, les deux vannes (B) de régulation de la pression et le module (C) de régulation de la pression pouvant être commandés par l'appareil (Z1) central de commande.

8. Système de freinage régulé électroniquement suivant la revendication 1 ou 2, **caractérisé en ce que** pour un essieu (VA) avant et pour un deuxième essieu (2.HA) arrière, il est prévu respectivement un module (C) de régulation de la pression et pour un premier essieu (1.HA) arrière, il est prévu une vanne (B) de régulation de la pression ayant deux vannes (A) de commande de la pression montées en aval, la vanne (B) de régulation de la pression et les deux modules (C) de régulation de la pression pouvant être commandées par l'appareil (Z1) centrale de commande.

9. Système de freinage régulé électroniquement suivant la revendication 1 ou 2, **caractérisé en ce que** pour un essieu (VA) avant, il est prévu une vanne (B) de régulation de la pression ayant deux vannes (A) de commande de la pression montées en aval et pour un premier essieu (1.HA) arrière et pour un deuxième essieu (2.HA), il est prévu deux vannes (B) de régulation de la pression, par lesquelles respectivement deux vannes (A) de commande de la pression d'un côté peuvent être commandées, les en tous trois vannes (B) de régulation de la pression étant commandées par l'appareil (Z1) central de commande.
